# EUROPEAN PATENT APPLICATION

(11) **EP 4 625 737 A1**
(43) Date of publication of application: **01.10.2025**
(21) Application number: 22968129.1
(22) Date of filing: 14.12.2022
(51) Int. Cl.: H02H 11/00

(54) **BATTERY MODULE, CONTROL METHOD OF BATTERY MODULE, ELECTRIC VEHICLE AND POWER DEVICE**

(71) Applicant: HUAWEI DIGITAL POWER TECHNOLOGIES CO., LTD., Shenzhen Guangdong 518043 (CN)
(72) Inventor: LIU, Shengsheng, Shenzhen, Guangdong 518043 (CN); ZHU, Jianhua, Shenzhen, Guangdong 518043 (CN); BAO, Riliang, Shenzhen, Guangdong 518043 (CN)
(74) Representative: Epping - Hermann - Fischer
(86) International application number: PCT/CN2022/138854
(87) International publication number: WO 2024/124418

(57) **Abstract**

A battery module control method is applied to a battery module. The battery module includes a plurality of battery packs, a power switch, a sampling circuit, and a controller. The power switch includes a first switch, the controller is separately coupled to the first switch and the sampling circuit, and the plurality of battery packs output electric energy by using the first switch. When controlling the plurality of battery packs to discharge, the controller can send a PWM signal with a specified duty cycle to the first switch of the power switch. When the battery module supplies power to a capacitive load, an output voltage of an output port is increased by a part of voltage in each switch cycle, so that the output voltage of the output port can reach a large voltage through superimposition. If the battery module is short-circuited, the output voltage of the output port is quite low or zero. A processor can distinguish, based on whether the output voltage of the output port is greater than a specified voltage, whether the battery module is short-circuited or the battery module supplies power to the capacitive load, so that the battery module supplies power to the capacitive load.

## Description

### TECHNICAL FIELD

The present invention relates to the field of battery management technologies, and in particular, to a battery module, a battery module control method, an electric vehicle, and a power device.

### BACKGROUND

With the development of new energy technologies, an increasing quantity of power devices are equipped with battery modules. The battery module may be used as a main power supply or a backup power supply of the power device. The battery module generally includes a plurality of battery cell packs and a battery management system (battery management system, BMS). The BMS may have functions of collecting a total voltage of the battery packs and a total current of the battery packs, controlling connection or disconnection of a charging circuit of the battery pack and a discharging circuit of the battery pack, and the like.

In the conventional technology, when the battery module is charged or discharges, a charging current or a discharging current of the battery module is excessively large. As a result, the battery module triggers an overcurrent protection function and does not output to the outside, causing a power outage of a post-phase load. When the battery module supplies power to a capacitive load, a voltage of a capacitor of the capacitive load cannot abruptly change at a moment of charging of the capacitor of the capacitive load. This is equivalent to that the battery module is short-circuited, and a current of the battery module suddenly increases. As a result, the battery module cannot supply power to the capacitive load.

### SUMMARY

To resolve the foregoing problem, an embodiment of this application provides a battery module. When a plurality of battery packs of the battery module discharge, a PWM signal with a specified duty cycle may be sent to a power switch. Whether the battery module is short-circuited or the battery module supplies power to a capacitive load may be distinguished based on whether an output voltage of the battery module is greater than a specified voltage, so that the battery module supplies power to the capacitive load. In addition, this application further provides embodiments of a battery module control method corresponding to the battery module, an electric vehicle, and a power device.

Therefore, the following technical solutions are used in embodiments of this application.

According to a first aspect, an embodiment of this application provides a battery module, including: a plurality of battery packs; an output port, electrically connected to a load, and configured to enable the battery module to provide electric energy for the load; a power switch, coupled between the plurality of battery packs and the output port, and configured to control the plurality of battery packs to transfer electric energy to the output port; a sampling circuit, coupled to the output port, and configured to collect an output voltage of the output port; and a controller, configured to send a PWM signal with a specified duty cycle to the power switch, where the PWM signal is used to control the power switch to be in an on state; and the controller is further configured to: receive the output voltage collected by the sampling circuit, and in response to that the output voltage is not less than a specified voltage, determine that the load powered by the battery module is a capacitive load.

In this implementation, when controlling the plurality of battery packs to discharge, the controller may send the PWM signal with the specified duty cycle to the power switch. When the battery module supplies power to the capacitive load, the output voltage of the output port is increased by a part of voltage in each switch cycle, so that the output voltage of the output port can reach a large voltage through superimposition. If the battery module is short-circuited, the output voltage of the output port is quite low or zero. A processor may distinguish, based on whether the output voltage of the output port is greater than the specified voltage, whether the battery module is short-circuited or the battery module supplies power to the capacitive load, so that the battery module supplies power to the capacitive load.

In an implementation, the controller is further configured to: send a PWM signal with a full duty cycle to the power switch; and receive the output voltage collected by the sampling circuit, and in response to that the output voltage is less than a total voltage of the plurality of battery packs, determine that the load powered by the battery module is the capacitive load or the battery module is short-circuited.

In this implementation, before the battery module supplies power to the load, the controller may detect a load type. The controller sends the PWM signal with the full duty cycle to the power switch for a plurality of times to detect the output voltage of the output port. When the output voltage of the output port is equal to the total voltage of the plurality of battery packs, the load powered by the battery module is a non-capacitive load. When the output voltage of the battery module is less than the total voltage of the plurality of battery packs, the load powered by the battery module is the capacitive load or the battery module is short-circuited. The controller detects the load type to execute different control logics for different types of loads, thereby improving control efficiency of the battery module.

In an implementation, the controller is further configured to delay for specified time to send the PWM signal with the full duty cycle to the power switch, and the specified time is time for the controller to start the plurality of battery packs to discharge.

In this implementation, when the controller controls the battery packs to discharge, a DC/DC converter, a PCB, a transformer, and another component need to be invoked to work, so that the battery packs can discharge. After discharging is started, the battery module sends the PWM signal to a switch of the power switch after delaying for the specified time, to avoid a detection error of the controller.

In an implementation, the controller is further configured to: in response to that the output voltage is not less than the specified voltage, send a PWM signal with a stepped duty cycle to the power switch, where the stepped duty cycle is a changed duty cycle increased from the specified duty cycle to the full duty cycle; and receive the output voltage collected by the sampling circuit, and in response to that the output voltage is equal to the total voltage of the plurality of battery packs, send the PWM signal with the full duty cycle to the power switch.

In this implementation, when the controller determines that the load powered by the battery module is the capacitive load, the voltage of the output port may not reach the total voltage of the plurality of battery packs. The controller increases the duty cycle of the PWM signal from the specified duty cycle to the full duty cycle, so that the voltage of the output port is quickly increased to the total voltage of the plurality of battery packs, and the battery module appropriately supplies power to the capacitive load.

In an implementation, the specified duty cycle is the stepped duty cycle.

In this implementation, each time the duty cycle of the PWM signal is increased by the specified duty cycle, a voltage by which the output voltage of the output port is increased each time is continuously increased. When the battery module supplies power to the capacitive load, time for the output voltage of the output port to reach the specified voltage is shortened. This can shorten time for the controller to send the PWM signal, reduce a risk of damage to another component of the battery module, and reduce a requirement on electrical and thermal performance.

In an implementation, the stepped duty cycle is a changed duty cycle increased by the specified duty cycle at an interval of at least one switch cycle, and a value of the specified duty cycle increased each time is continuously increased.

In this implementation, when a value of the specified duty cycle by which the duty cycle of the PWM signal is increased each time is continuously increased, the voltage by which the output voltage of the output port is increased each time is further continuously increased. When the battery module supplies power to the capacitive load, the time for the output voltage of the output port to reach the specified voltage can be further shortened. This can shorten the time for the controller to send the PWM signal, reduce a risk of damage to another component of the battery module, and reduce a requirement on electrical and thermal performance.

In an implementation, the controller is further configured to: send the PWM signal with the full duty cycle to the power switch, and receive the output voltage collected by the sampling circuit; and in response to that the output voltage is not less than the specified voltage, determine that the load powered by the battery module is the capacitive load; or in response to that the output voltage is less than the specified voltage, determine that the battery module is short-circuited.

In this implementation, when the battery module supplies power to a capacitive load with a large capacitance value, the controller outputs the full duty cycle. If the output voltage of the output port reaches the specified voltage in a process in which the duty cycle of the PWM signal is increased, the controller distinguishes whether the battery module is short-circuited or the battery module supplies power to the capacitive load with the large capacitance value.

In an implementation, the controller is further configured to: in response to that the battery module is short-circuited, stop sending the PWM signal to the power switch.

In this implementation, when determining that the battery module is short-circuited, the controller stops sending the PWM signal, to avoid damage to another component caused by a short circuit of the battery module.

According to a second aspect, an embodiment of this application provides a battery module control method, applied to a battery module. The battery module includes a plurality of battery packs, an output port, a power switch, a sampling circuit, and a controller; the power switch is coupled between the plurality of battery packs and the output port; the sampling circuit is coupled to the output port; the controller is separately coupled to the power switch and the sampling circuit; and the method is performed by the controller, and includes: controlling the plurality of battery packs to discharge; sending a PWM signal with a specified duty cycle to the power switch, where the PWM signal is used to control the power switch to be in an on state; and receiving an output voltage collected by the sampling circuit, and in response to that the output voltage is not less than a specified voltage, determining that a load powered by the battery module is a capacitive load.

In an implementation, before the sending a PWM signal with a specified duty cycle to the power switch, the method further includes: sending a PWM signal with a full duty cycle to the power switch; and receiving the output voltage collected by the sampling circuit, and in response to that the output voltage is less than a total voltage of the plurality of battery packs, determining that the load powered by the battery module is the capacitive load or the battery module is short-circuited.

In an implementation, before the sending a PWM signal with a full duty cycle to the power switch, the method further includes: delaying for specified time to send the PWM signal with the full duty cycle to the power switch, where the specified time is time for the controller to start the plurality of battery packs to discharge.

In an implementation, the specified duty cycle is a fixed value, and the method further includes: in response to that the output voltage is not less than the specified voltage, sending a PWM signal with a stepped duty cycle to the power switch, where the stepped duty cycle is a changed duty cycle increased from the specified duty cycle to the full duty cycle; and receiving the output voltage collected by the sampling circuit, and in response to that the output voltage is equal to the total voltage of the plurality of battery packs, sending the PWM signal with the full duty cycle to the power switch.

In an implementation, the specified duty cycle is the stepped duty cycle.

In an implementation, the stepped duty cycle is a changed duty cycle increased by the specified duty cycle at an interval of at least one switch cycle, and a value of the specified duty cycle increased each time is continuously increased.

In an implementation, the method further includes: sending the PWM signal with the full duty cycle to the power switch, and receiving the output voltage collected by the sampling circuit; and in response to that the output voltage is not less than the specified voltage, determining that the load powered by the battery module is the capacitive load; or in response to that the output voltage is less than the specified voltage, determining that the battery module is short-circuited.

In an implementation, the method further includes: in response to that the battery module is short-circuited, stopping sending a PWM signal to the power switch.

According to a third aspect, an embodiment of this application provides an electric vehicle, including: at least one electric device; and a power backup device, electrically connected to the at least one electric device. The power backup device includes a power switch, configured to control the power backup device to provide electric energy for the at least one electric device; the power backup device is configured to send a PWM signal with a specified duty cycle to the power switch, where the PWM signal is used to control the power switch to be in an on state; and the power backup device is further configured to: detect an output voltage, and in response to that the output voltage is not less than a specified voltage, determine that the load powered by the power backup device is a capacitive load.

In an implementation, the power backup device is further configured to: in response to that the output voltage is not less than the specified voltage, send a PWM signal with a stepped duty cycle to the power switch, where the stepped duty cycle is a changed duty cycle increased from the specified duty cycle to a full duty cycle; and detect the output voltage, and in response to that the output voltage is equal to a total voltage of the power backup device, send a PWM signal with the full duty cycle to the power switch.

In an implementation, the specified duty cycle is the stepped duty cycle.

In an implementation, the power backup device is further configured to: send the PWM signal with the full duty cycle to the power switch, and detect the output voltage; and in response to that the output voltage is not less than the specified voltage, determine that the electric device powered by the power backup device is the capacitive load; or in response to that the output voltage is less than the specified voltage, determine that the power backup device is short-circuited.

According to a fourth aspect, an embodiment of this application provides a power device, including: at least one electronic component; and at least one battery module, respectively electrically connected to the at least one electronic component, where the battery module includes a power switch, configured to control the battery module to provide electric energy for the at least one electronic component; the battery module is configured to send a PWM signal with a specified duty cycle to the power switch, where the PWM signal is used to control the power switch to be in an on state; and the battery module is further configured to: detect an output voltage, and in response to that the output voltage is not less than a specified voltage, determine that the load powered by the battery module is a capacitive load.

In an implementation, there is a PWM signal with a duty cycle, where the stepped duty cycle is a changed duty cycle increased from the specified duty cycle to a full duty cycle; and detect the output voltage, and in response to that the output voltage is equal to a total voltage of the battery module, send a PWM signal with the full duty cycle to the power switch.

In an implementation, the specified duty cycle is the stepped duty cycle.

In an implementation, the battery module is further configured to: send the PWM signal with the full duty cycle to the power switch, and detect the output voltage; and in response to that the output voltage is not less than the specified voltage, determine that the electronic component powered by the battery module is the capacitive load; or in response to that the output voltage is less than the specified voltage, determine that the battery module is short-circuited.

### BRIEF DESCRIPTION OF DRAWINGS

The following briefly describes accompanying drawings that need to be used in descriptions of embodiments or a conventional technology.
FIG. 1 is a schematic diagram of an architecture of a BMS in the conventional technology;
FIG. 2 is a schematic diagram of an architecture of a power device according to an embodiment of this application;
FIG. 3 is a schematic diagram of an architecture of a BMS according to an embodiment of this application;
FIG. 4 is a schematic diagram of a relationship among a PWM signal, time, and an output voltage for a controller to identify a capacitive load or a short circuit according to an embodiment of this application;
FIG. 5 is a schematic diagram of a relationship among a PWM signal, time, and an output voltage for a controller to identify a capacitive load or a short circuit according to an embodiment of this application;
FIG. 6 is a schematic diagram of a relationship among a PWM signal, time, and an output voltage for a controller to identify a capacitive load or a short circuit according to an embodiment of this application; and
FIG. 7 is a schematic flowchart of a battery module control method according to an embodiment of this application.

### DESCRIPTION OF EMBODIMENTS

The following describes technical solutions in embodiments of this application with reference to accompanying drawings in embodiments of this application.

In descriptions of this application, orientation or location relationships indicated by terms "center", "above", "below", "front", "back", "left", "right", "vertical", "horizontal", "top", "bottom", "inside", "outside", and the like are based on orientation or location relationships shown in the accompanying drawings, and are merely intended for ease of describing this application and simplifying the descriptions, but are not intended to indicate or imply that a specified apparatus or element needs to have a specific orientation, and be constructed and operated in a specific orientation. Therefore, this cannot be understood as a limitation on this application.

In the descriptions of this application, it should be noted that, unless otherwise clearly specified and limited, terms "mount", "link", and "connect" should be understood in a broad sense, for example, such terms may indicate a fixed connection, a detachable connection, or a butt joint connection or an integrated connection. A person of ordinary skill in the art may understand specific meanings of the foregoing terms in this application based on a specific situation.

In the descriptions of this application, a term "and/or" describes an association relationship between associated objects and indicates that three relationships may exist. For example, A and/or B may indicate three cases: Only A exists, both A and B exist, and only B exists. A character "/" in this specification indicates an "or" relationship between the associated objects. For example, A/B indicates A or B.

In this application, terms "first", "second", and the like are used to distinguish between different objects but are not used to describe a particular order of the objects. For example, a first response message, a second response message, and the like are used to distinguish between different response messages, but are not used to describe a particular order of the response messages.

In embodiments of this application, a word "in an embodiment", "for example", or the like indicates giving an example, an illustration, or a description. Any embodiment or design scheme described as "in an embodiment" or "for example" in embodiments of this application should not be explained as being more preferred or having more advantages than another embodiment or design scheme. Specifically, use of the word "in an embodiment", "for example", or the like is intended to present a related concept in a specific manner.

In the descriptions of this specification, specific features, structures, materials, or characteristics may be combined in an appropriate manner in any one or more of embodiments or examples.

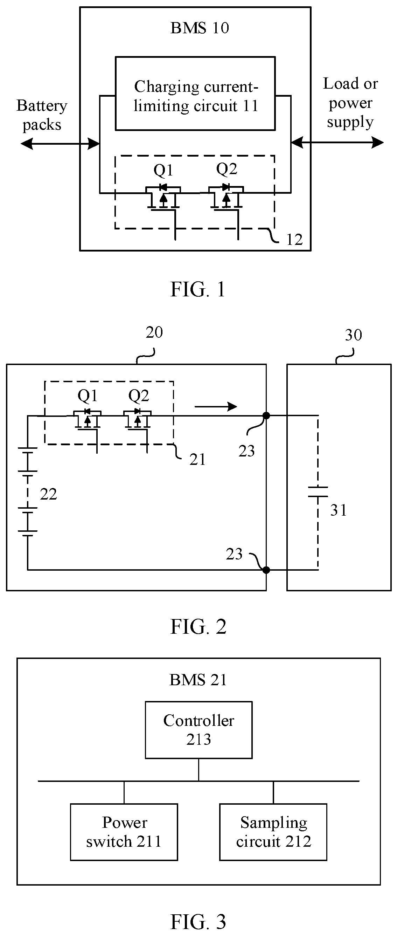

FIG. 1 is a schematic diagram of an architecture of a BMS in the conventional technology. As shown in FIG. 1, a BMS 10 includes a charging current-limiting circuit 11 and a power switch 12. The charging current-limiting circuit 11 and the power switch 12 are connected in parallel to a plurality of battery packs of a battery module. The power switch 12 includes a first switch Q1 and a second switch Q2. The first switch Q1 and the second switch Q2 are connected in series.

The first switch Q1 and the second switch Q2 of the power switch 12 are generally formed by connecting a metal-oxide-semiconductor field-effect transistor (metal-oxide-semiconductor field-effect transistor, MOSFET) ("a MOS transistor" for short) and a body diode in parallel. A body diode of the first switch Q1 is opposite to a body diode of the second switch Q2.

When the battery module is charged, the BMS 10 may detect a charging voltage. When detecting that a voltage difference of the charging voltage is large, the BMS 10 enables the charging current-limiting circuit 11 to be connected and the power switch 12 to be turned off. External electric energy may supply power to the plurality of battery packs of the battery module by using the charging current-limiting circuit 11. The charging current-limiting circuit 11 may allow a large current within a specified range to pass through, and allow an external large current to supply power to the plurality of battery packs of the battery module.

When detecting that the voltage difference of the charging voltage is small, the BMS 10 may enable the charging current-limiting circuit 11 to be disconnected and the first switch Q1 and the second switch Q2 of the power switch 12 to be turned on. An external power supply may supply a large current to supply power to the plurality of battery packs of the battery module by using the second switch Q2 and the first switch Q1.

When the battery module discharges, the BMS 10 may enable the charging current-limiting circuit 11 to be disconnected, and both the first switch Q1 and the first switch Q2 of the power switch 12 to be turned on. The plurality of battery packs of the battery module may provide electric energy for a load by using the first switch Q1 and the second switch Q2.

When the battery module is short-circuited, a discharging current of the battery module is excessively large. As a result, the battery module triggers discharging overcurrent protection and does not output, and the battery packs may even be burnt down. To avoid that the battery module outputs a large current, the BMS 10 may control a MOS transistor of the first switch Q1 or a MOS transistor of the first switch Q2 to slowly start, and detect an output current of the battery module. When detecting that the output current of the battery module is excessively large, the BMS 10 controls the MOS transistor of the first switch Q1 to stop starting, to avoid damage to the battery module.

However, when the battery module supplies power to a capacitive load, a voltage of a capacitor of the capacitive load cannot be abruptly increased in a process in which the power switch 12 slowly starts. This is equivalent to that the capacitor of the capacitive load short-circuits the battery module, and the BMS 10 detects a large current in the battery module. Therefore, in a process in which the power switch 12 is slowly turned on, the BMS 10 cannot distinguish whether the battery module is short-circuited or the battery module supplies power to the capacitive load. As a result, the battery module cannot supply power to the capacitive load.

To resolve a problem that the existing battery module cannot supply power to the capacitive load, the conventional technology provides two solutions respectively as follows.

A first solution is to increase a short-circuit current threshold. The BMS 10 identifies a short circuit by increasing a current threshold for triggering short-circuit protection. However, in this manner, the BMS 10 cannot distinguish whether the battery module is short-circuited or the battery module supplies power to the capacitive load. In addition, after the BMS 10 increases the short-circuit current threshold, short-circuit time of the battery module is delayed. If the battery module is short-circuited, a risk of damage to the battery packs of the battery module is increased.

A second solution is a combination manner of a counting unit and short-circuit delay time. Within the short-circuit delay time, if a quantity of times counted by the counting unit exceeds a preset quantity threshold of a short-circuit current preset value, a short circuit identified by the BMS 10 is true. However, the BMS 10 increases a risk of damage to a component, and increases a requirement on electrical and thermal stress of the component. The BMS 10 cannot adaptively adjust start time of the capacitive load based on a size of the capacitive load. In addition, when capacitance of the capacitive load is large, the BMS 10 can still reach the preset quantity threshold, and a true short circuit is identified. Therefore, the capacitive load cannot be accurately identified.

To resolve a defect that the existing battery module cannot supply power to the capacitive load, embodiments of this application provide a power device, an electric vehicle, a battery module, and a battery module control method.

FIG. 2 is a schematic diagram of an architecture of a power device according to an embodiment of this application. As shown in FIG. 2, the power device includes a battery module 20 and an electronic component 30. The battery module 20 is electrically connected to the electronic component 30. The battery module 20 includes a BMS 21, a plurality of battery packs 22, and output ports 23. If the electronic component 30 is a capacitive load, a plurality of capacitors 31 are disposed inside the electronic component 30. The output port 23 is disposed on an outer surface of the battery module 20. The plurality of battery packs 22 are electrically connected to the output port 23 through the BMS 21. The output port 23 may be electrically connected to the electronic component 30 through a conducting wire, so that the battery module 20 may be electrically connected to the capacitors 31 of the electronic component 30. The electronic component 30 may be an electric component of the power device, such as a chip, a circuit board, a processor, a memory, or another component. The power device may be an electric vehicle, a base station, an outdoor cabinet, or another device.

In an embodiment, there may be one or more battery components 20 inside the power device. There may be one or more electronic components 30 inside the power device. Each battery component 20 may be electrically connected to one or more electronic components 30.

In this application, the power device includes at least one electronic component and at least one battery component. The at least one battery module is electrically connected to the at least one electronic component. The battery module includes a power switch. The power switch controls the battery module to provide electric energy for the electronic component. The battery module is configured to send a pulse width modulation (pulse width modulation, PWM) signal with a specified duty cycle to the power switch. The PWM signal is used to control the power switch to be in an on state. The battery module is further configured to: detect an output voltage, and in response to that the output voltage is not less than a specified voltage, determine that the load powered by the battery module is the capacitive load.

In an embodiment, the power device is an electric vehicle. The electric vehicle includes at least one electric device and a power backup device. The power backup device and the at least one electric device. The power backup device includes a power switch. The power switch controls the power backup device to provide electric energy for the at least one electric device. The power backup device is configured to send a PWM signal with a specified duty cycle to the power switch. The PWM signal is used to control the power switch to be in an on state. The power backup device is further configured to: detect an output voltage, and in response to that the output voltage is not less than a specified voltage, determine that the load powered by the battery module is a capacitive load. In another embodiment, the electric device may be a motor, a vehicle light system, a cooling system, or the like.

FIG. 3 is a schematic diagram of an architecture of a BMS according to an embodiment of this application. As shown in FIG. 3, the BMS 21 includes a power switch 211, a sampling circuit 212, and a controller 213. The controller 213 is separately electrically connected to the power switch 211 and the sampling circuit 212.

The power switch 211 is configured to control the plurality of battery packs 22 of the battery module 20 to provide electric energy for the electronic component 30. In this application, the power switch 211 may include a first switch Q1 and a second switch Q2. The first switch Q1 and the second switch Q2 are connected in series. Both the first switch Q1 and the second switch Q2 may be formed by a MOS transistor, an insulated gate bipolar transistor (insulated gate bipolar transistor, IGBT), a body diode, and another component.

The sampling circuit 212 is electrically connected to the output port 23, and is configured to collect a voltage value of a direct current of the output port 23 and send the voltage value to the controller 213.

The controller 213 may be a microcontroller unit (microcontroller unit, MCU), a digital signal processing (digital signal processing, DSP) unit, a field programmable gate array (field programmable gate array, FPGA), or another control component. The controller 213 may receive the voltage value from the sampling circuit 212. The controller 213 may send a PWM signal to the power switch 211 to control the first switch Q1 and/or the second switch Q2 of the power switch 211 to be in an on/off state or an off state, to implement a function of distinguishing whether the battery module 20 is short-circuited or the battery module 20 supplies power to the capacitive load.

When the controller 213 controls the battery packs 22 to discharge, a direct current/direct current (direct current/ direct current, DC/DC) converter, a printed circuit board (printed circuit board, PCB), a transformer, and another component need to be invoked to work, so that the battery packs 22 can discharge. When the controller 213 starts the battery packs 22 to discharge, the controller 213 sends the PWM signal to a switch of the power switch 211 after delaying for first specified time. After discharging is started, the battery module 21 supplies power to the electronic component 30 after delaying for specified time, to avoid a detection error of the controller 213. The first specified time is time for the controller 213 to start the plurality of battery packs to discharge.

After determining that the battery module 20 completes discharging start work, the controller 213 sends a PWM signal to the second switch Q2 of the power switch 211. The PWM signal sent by the controller 213 is a PWM signal with a full duty cycle. To be specific, in one switch cycle, time t for the controller 213 to send the PWM signal is equal to one switch cycle T. The controller 213 sends the PWM signal with the full duty cycle to the second switch Q2, so that the second switch Q2 is always in an on/off state.

The controller 213 may send the PWM signal with the full duty cycle to the first switch Q1 of the power switch 211 for a plurality of times within second specified time. After receiving the PWM signal, the first switch Q1 of the power switch 211 may enable the power switch 211 to be in an on state. In this case, the battery module 20 may provide electric energy for a load.

When the controller 213 sends the PWM signal to the first switch Q1 of the power switch 211, the controller 213 may receive, in real time, a sampling voltage Vbus that is of the output port of the battery module and that is collected by the sampling circuit 212, and record and save the sampling voltage Vbus. After receiving the sampling voltage Vbus, the controller 213 determines whether the sampling voltage Vbus is equal to a voltage Vbat of the plurality of battery packs 21 of the battery module 20.

In an embodiment, when the controller 213 determines that the sampling voltage Vbus is equal to the voltage Vbat of the plurality of battery packs 21 of the battery module 20, the controller 213 may consider that the battery module 20 is not short-circuited or the load powered by the battery module 20 is another non-capacitive load.

In an embodiment, when the sampling voltage Vbus is less than the voltage Vbat of the plurality of battery packs 21 of the battery module 20, the controller 213 may consider that the battery module 20 is short-circuited or the battery module 20 supplies power to the capacitive load, and triggers an overcurrent protection function. The controller 213 stops sending the PWM signal to the first switch Q1 of the power switch 211, and turns off a drive, so that the battery module 20 stops outputting electric energy.

After a period of time, the controller 213 sends the PWM signal with the full duty cycle to the first switch Q1 of the power switch 211 again, and receives the sampling voltage Vbus that is of the output port of the battery module and that is collected by the sampling circuit 212. The controller 213 detects again whether the battery module 20 triggers the overcurrent protection function. The rest may be deduced by analogy, until the controller 213 completes a plurality of times of detection on whether the battery module 20 triggers the overcurrent protection function. In this application, when the controller 213 sends the PWM signal for the plurality of times and triggers overcurrent protection, the controller 213 may determine that the battery module 20 is short-circuited or the load powered by the battery module 20 is the capacitive load.

In a process in which the controller 213 distinguishes whether the battery module 20 is short-circuited or the load powered by the battery module 20 is the capacitive load, the controller 213 sends a PWM signal with a specified duty cycle to the first switch Q1 of the power switch 211. The specified duty cycle is a ratio of time Ton, for the controller 213 to send the PWM signal to the first switch Q1 of the power switch 211 in one switch cycle, to the switch cycle T.

The PWM signal with the specified duty cycle is not the PWM signal with the full duty cycle, and the PWM signal with the specified duty cycle is an intermittent pulse signal. When the battery module supplies power to the capacitive load, a small amount of electricity is added to a capacitor of the capacitive load in each switch cycle, so that the output voltage Vbus of the output port 23 is increased by a part of voltage in each switch cycle. The output voltage of the output port 23 may be gradually increased to a large voltage. When the battery module 20 is short-circuited, the output voltage Vbus of the output port 23 is always very small or is 0.

When the battery module 20 supplies power to the capacitive load, the output voltage of the output port 23 is gradually increased. In an embodiment, in a process in which the controller 213 sends the PWM signal to the first switch Q1 of the power switch 211, in a first switch cycle, after the controller 213 controls the power switch 211 to be in the on state, the output voltage of the output port 23 is increased by △V. In a second switch cycle, after the controller 213 controls the power switch 211 to be in the on state, the output voltage of the output port 23 is increased by △V again based on the first switch cycle to reach 2△V. By analogy, in an N^{th} switch cycle, after the controller 213 controls the power switch 211 to be in the on state, the output voltage of the output port 23 is N△V. N is a positive integer greater than or equal to 2.

In this application, in one switch cycle, when a capacitance value of the capacitor of the capacitive load is large, a voltage value △V by which the output voltage of the output port 23 is increased each time is small, and a speed at which the output voltage of the output port 23 is increased is low. When a capacitance value of the capacitor of the capacitive load is small, a voltage value △V by which the output voltage of the output port 23 is increased each time is large, and a speed at which the output voltage of the output port 23 is increased is high.

In this application, the controller 213 may send the PWM signal with the specified duty cycle to the first switch Q1 of the power switch 211 within third specified time, to avoid that the first switch Q1 of the power switch 211 is always in an on/off state. The third specified time is a time period in which the controller 213 determines that the battery module 20 is a capacitive load with a small capacitance value.

When the controller 213 sends the PWM signal to the first switch Q1 of the power switch 211, the controller 213 collects the output voltage Vbus of the output port 23 in real time by using the sampling circuit 212. The controller 213 may determine, based on whether the output voltage Vbus of the output port 23 is less than a specified voltage, whether the load powered by the battery module 20 is the capacitive load. The specified voltage is an instantaneous output voltage that is of the output port 23 and that is obtained when the battery module 20 supplies power to the capacitive load. In another embodiment, the specified voltage may be a minimum value of an instantaneous output voltage obtained when the battery module 20 supplies power to the capacitive load.

When the controller 213 detects, within the third specified time, that the output voltage Vbus of the output port 23 is not less than the specified voltage, the controller 213 may determine that the load powered by the battery module 20 is the capacitive load. In another embodiment, when the controller 213 determines that the load powered by the battery module 20 is the capacitive load, the controller 213 may stop sending the PWM signal with the specified duty cycle to the first switch Q1 of the power switch 211, to shorten time for turning on the battery module 20 and reduce a risk of burning down the battery module 20.

When the controller 213 detects, within the third specified time, that the output voltage Vbus of the output port 23 is less than the specified voltage, the controller 213 may consider that the battery module 20 is short-circuited or a capacitance value of the capacitive load powered by the battery module 20 is large. When the capacitance value of the capacitive load is large, the speed at which the output voltage of the output port 23 is increased is low, and the output voltage of the output port 23 may be less than the specified voltage within the third specified time. In an embodiment, when the controller 213 detects, at the third specified time, that the output voltage Vbus of the output port 23 is not less than a voltage Vmin, the controller 213 may determine that the battery module 20 supplies power to a capacitive load with a large capacitance value.

A duty cycle of a PWM signal sent by the controller 213 within the third specified time may be a fixed value, or may be a stepped duty cycle. The stepped duty cycle may be continuously increased from the specified duty cycle to the full duty cycle. In this application, in a first switch cycle within the third specified time, the duty cycle of the PWM signal is D1. In a second switch cycle within the third specified time, the duty cycle of the PWM signal is increased by one specified duty cycle based on the first switch cycle, and the duty cycle of the PWM signal is denoted as D1 + △D1. In a third switch cycle within the third specified time, the duty cycle of the PWM signal is increased by one specified duty cycle based on the second switch cycle, and the duty cycle of the PWM signal is denoted as D1 + 2△D1. By analogy, in a M^{th} switch cycle within the third specified time, the duty cycle of the PWM signal is D1 + (M - 1)△D1. M is a positive integer greater than or equal to 2.

In an embodiment, the duty cycle of the PWM signal may be increased by one specified duty cycle △D1 after a plurality of switch cycles.

In an embodiment, the duty cycle of the PWM signal may be increased by one specified duty cycle △D1 after different switch cycles.

In an embodiment, a value of a specified duty cycle by which the duty cycle of the PWM signal is increased each time may be different.

In this embodiment of this application, each time the duty cycle of the PWM signal is increased by the specified duty cycle, a voltage △V by which the output voltage of the output port 23 is increased each time is continuously increased. When the battery module 20 supplies power to the capacitive load, time for the output voltage Vbus of the output port 23 to reach the specified voltage is shortened. This can shorten time for the controller 213 to send the PWM signal, reduce a risk of damage to another component of the battery module 20, and reduce a requirement on electrical and thermal performance.

Compared with a duty cycle with a fixed value, the stepped duty cycle has advantages as follows: When the battery module 20 supplies power to the capacitive load with the large capacitance value, the output voltage Vbus of the output port 23 may be increased to the specified voltage at the third specified time, so that accuracy of distinguishing, by the controller 213, whether the battery module 20 is short-circuited or the load powered by the battery module 20 is the capacitive load can be improved.

If the duty cycle of the PWM signal sent by the controller 213 within the third specified time is the fixed value, the controller 213 may send a PWM signal with the stepped duty cycle to the first switch Q1 of the power switch 211 again after the third specified time. The stepped duty cycle may be continuously increased from the specified duty cycle to the full duty cycle. In this application, in a first switch cycle after the third specified time, the duty cycle of the PWM signal is D2. In a second switch cycle after the third specified time, the duty cycle of the PWM signal is increased by one specified duty cycle based on the first switch cycle, and the duty cycle of the PWM signal is D2 + △D2. In a third switch cycle after the third specified time, the duty cycle of the PWM signal is increased by one specified duty cycle based on the second switch cycle, and the duty cycle of the PWM signal is D2 + 2△D2. The rest may be deduced by analogy, until the duty cycle of the PWM signal sent by the controller 213 is the full duty cycle. Time for the PWM signal to be increased from the specified duty cycle to the full duty cycle is a fourth specified time.

In an embodiment, the duty cycle of the PWM signal may be increased by one specified duty cycle △D2 after a plurality of switch cycles.

In an embodiment, the duty cycle of the PWM signal may be increased by one specified duty cycle △D2 after different switch cycles.

In an embodiment, a value of a specified duty cycle by which the duty cycle of the PWM signal is increased each time may be different.

In this embodiment of this application, when the battery module 20 supplies power to the capacitive load with the large capacitance value, the controller 213 increases the duty cycle of the PWM signal from the specified duty cycle to the full duty cycle. If the output voltage of the output port 23 reaches the specified voltage in a process in which the duty cycle of the PWM signal is increased, the controller 213 may distinguish in advance whether the battery module 20 is short-circuited or the load powered by the battery module 20 is the capacitive load with the large capacitance value. This can reduce a risk of damage to another component of the battery module 20, and reduce a requirement on electrical and thermal performance.

In a process in which the controller 213 distinguishes whether the battery module 20 is short-circuited or the load powered by the battery module 20 is the capacitive load with the large capacitance value, the PWM signal with the full duty cycle may be sent to the first switch Q1 of the power switch 211. The controller 213 may send the PWM signal with the full duty cycle to the first switch Q1 of the power switch 211 within a fifth specified time, to avoid that the first switch Q1 of the power switch 211 is always in an on/off state. The fifth specified time is a time period in which the controller 213 determines that the battery module 20 is the capacitive load with the large capacitance value.

When the controller 213 sends the PWM signal to the first switch Q1 of the power switch 211 within the fifth specified time, the controller 213 collects the output voltage of the output port 23 in real time by using the sampling circuit 212. The controller 213 may determine, based on whether the output voltage Vbus of the output port 23 is less than the specified voltage, whether the load powered by the battery module 20 is the capacitive load with the large capacitance value.

In an embodiment, when the controller 213 detects, within the fifth specified time, that the output voltage Vbus of the output port 23 is not less than the specified voltage, the controller 213 may determine that the capacitance value of the capacitive load powered by the battery module 20 is large.

In an embodiment, when the controller 213 detects, within the fifth specified time, that the output voltage Vbus of the output port 23 is less than the specified voltage, the controller 213 may consider that the battery module 20 is short-circuited.

In this embodiment of this application, the controller 213 controls a duty cycle and time for sending the PWM signal to the first switch Q1 of the power switch 211, so that the three cases in which the battery module 20 supplies power to a capacitive load with a small capacitance value, the battery module 20 supplies power to a capacitive load with a large capacitance value, and the battery module 20 is short-circuited can be identified in different time periods. For example, the controller 213 sends the PWM signal with the full duty cycle to the first switch Q1 of the power switch 211 for the plurality of times within the second specified time. When the controller 213 sends the PWM signal for the plurality of times and triggers overcurrent protection, the controller 213 may determine that the battery module 20 is short-circuited or the load powered by the battery module 20 is the capacitive load.

For example, the controller 213 sends the PWM signal with the specified duty cycle or a changed duty cycle to the first switch Q1 of the power switch 211 within the third specified time. When the output voltage of the output port 23 is not less than the specified voltage, the controller 213 may consider that the battery module 20 supplies power to the capacitive load with the small capacitance value.

For example, within the fourth specified time, the duty cycle of the PWM signal sent by the controller 213 to the first switch Q1 of the power switch 211 is increased from the specified duty cycle to the full duty cycle. When the output voltage of the output port 23 is not less than the specified voltage, the controller 213 may consider that the battery module 20 supplies power to the capacitive load with the large capacitance value.

For example, the controller 213 sends the PWM signal with the full duty cycle to the first switch Q1 of the power switch 211 within the fifth specified time. When the output voltage of the output port 23 is not less than the specified voltage, the controller 213 may consider that the battery module 20 supplies power to the capacitive load with the large capacitance value. When the output voltage of the output port 23 is less than the specified voltage, the controller 213 may consider that the battery module 20 is short-circuited.

The controller 213 does not specify slow start time, and can adaptively adjust time of slow start processes of different sizes of capacitive loads, so that the slow start processes are fast. The controller 213 also has a short-circuit identification function, and may perform short-circuit identification and protection in a slow start phase. This reduces a risk of damage to another component of the battery module 20, and reduces a requirement on electrical and thermal performance.

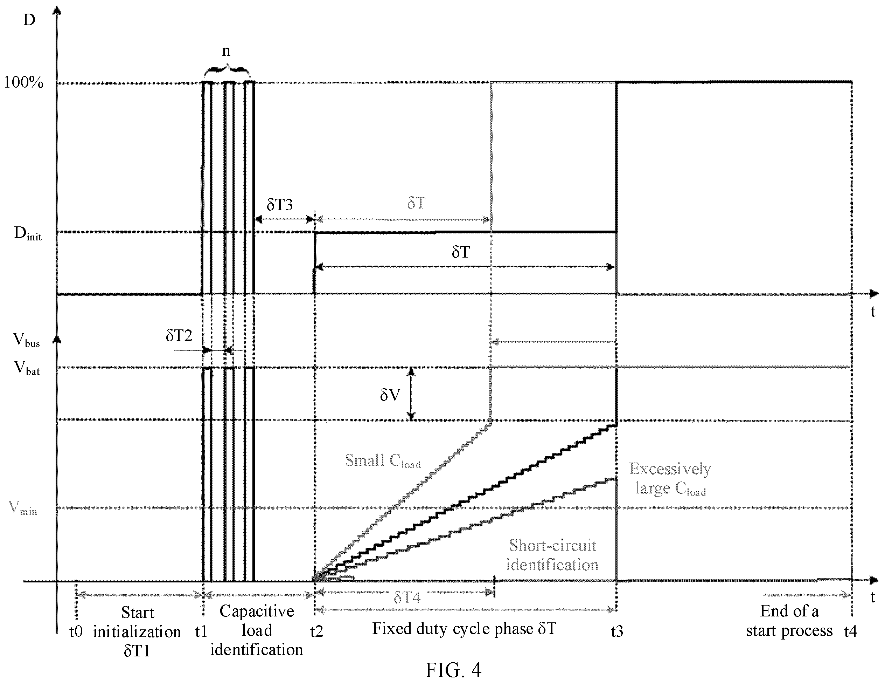

FIG. 4 is a schematic diagram of a relationship among a PWM signal, time, and an output voltage for a controller to identify a capacitive load according to an embodiment of this application. As shown in FIG. 4, in a time period t0-t1, the battery module 21 is in a start initialization phase. The controller 213 does not send a PWM signal to the first switch Q1 of the power switch 211 in this phase. The time period t0-t1 is the foregoing "first specified time".

A time period t1-t2 is a capacitive load identification phase. After the battery module 20 completes discharging start work, the controller 213 sends the PWM signal with the full duty cycle D to the first switch Q1 of the power switch 211. When the battery module 20 is short-circuited or the battery module 20 supplies power to the capacitive load, a port voltage of the battery module 20 is low or close to 0 V. In this case, the controller 213 triggers a discharging overcurrent protection function, and stops sending the PWM signal to the first switch Q1 of the power switch 211, to turn off the first switch Q1. The foregoing operation is repeated at an interval of δT2. In this way, if repetitions reach N times, it is identified that a post phase is a capacitive load or is short-circuited, and transmission of a PWM waveform with a full duty cycle is suspended. After a rest for δT3, a next phase starts. The time period t1-t2 is the foregoing "second specified time".

A time period t2-t3 is a fixed duty cycle phase. The controller 213 periodically sends a PWM signal with a specified duty cycle Dinit to the first switch Q1 of the power switch 211 in the time period t2-t3. When the battery module 20 is short-circuited, the output voltage Vbus of the output port 23 is basically 0 V or less than the specified voltage Vmin. The controller 213 detects the output voltage Vbus of the output port 23 at a moment δt4, stops slow starting, and completes the short-circuit identification function. When the load powered by the battery module 20 is the capacitive load, the output voltage Vbus of the output port 23 is increased by △V in each switch cycle. When the capacitance value of the capacitive load is large, a value of △V by which the output voltage Vbus of the output port 23 is increased in each switch cycle is small, and the output voltage Vbus of the output port 23 is less than Vbat-δV in the time period t2-t3. The controller 213 stops sending the PWM signal to the first switch Q1, and ends slow starting. When the capacitance value of the capacitive load powered by the battery module 20 is small, a value of △V by which the output voltage Vbus of the output port 23 is increased in each switch cycle is large, and the output voltage Vbus of the output port 23 is not less than Vbat-δV in the time period t2-t3. The battery module completes slow starting in advance, to adaptively adjust slow start time, and enter a next time period. The time period t2-t3 is the foregoing "third specified time". Vbat-δV is the foregoing "specified voltage".

A time period t3-t4 is a full duty cycle phase. The controller 213 periodically sends a PWM signal with a full duty cycle D to the first switch Q1 of the power switch 211 in the time period t3-t4. The time period t3-t4 is the foregoing "fifth specified time".

In this embodiment of this application, in the time period t2-t3, when the output voltage Vbus of the output port 23 is not less than Vbat-δV in the time period t2-t3, the controller 213 determines that the battery module 20 supplies power to the capacitive load, and may enter a next phase in advance to give the full duty cycle, and end slow starting, so that detection time can be shortened. In a time period t2-t4, when the output voltage Vbus of the output port 23 is less than Vmin, the controller 213 determines that the battery module 20 is short-circuited. The controller 213 may stop transmitting a waveform and end slow starting. If the specified duty cycle Dinit is very small, when the battery module 20 is short-circuited, the controller 213 may suppress a short-circuit impulse current flowing through the power switch 211.

Compared with the conventional technology, the controller 213 in this application identifies a capacitive load based on n times of triggering discharging overcurrent protection. The controller 213 may do not specify slow start time, and can adaptively adjust time of slow start processes of different sizes of capacitive loads, so that the slow start processes can be fast. In addition, the controller 213 also has the short-circuit identification function, and may perform short-circuit identification and protection in the slow start phase. This reduces a risk of damage to another component of the battery module 20, and reduces a requirement on electrical and thermal performance.

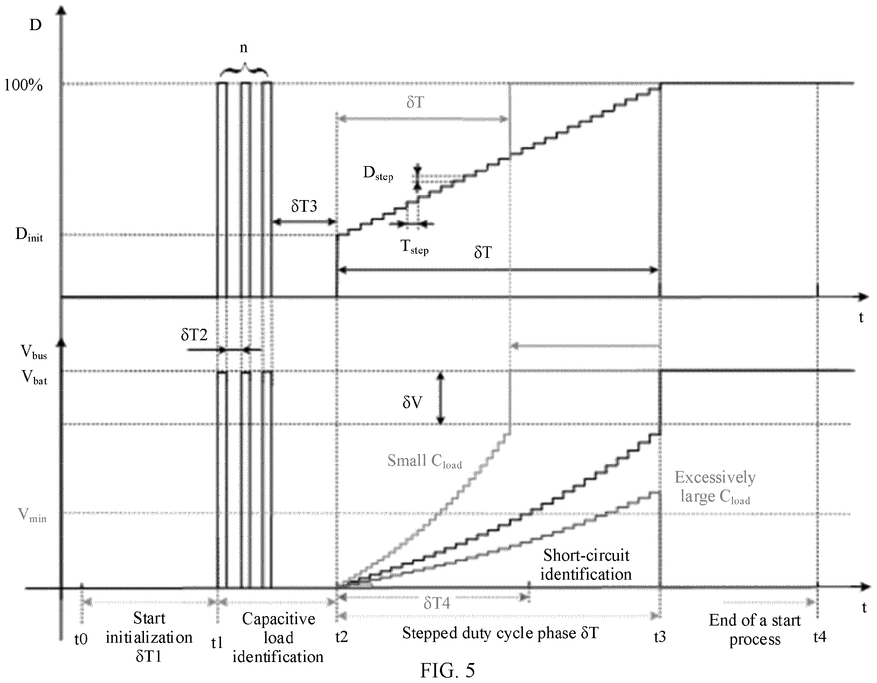

FIG. 5 is a schematic diagram of a relationship among a PWM signal, time, and an output voltage for a controller to identify a capacitive load according to an embodiment of this application. As shown in FIG. 5, in a time period t0-t1, the battery module 21 is in a start phase. The controller 213 does not send a PWM signal to the first switch Q1 of the power switch 211 in this phase. The time period t0-t1 is the foregoing "first specified time".

A time period t1-t2 is a capacitive load identification phase. After the battery module 20 completes discharging start work, the controller 213 periodically sends the PWM signal with the full duty cycle D to the first switch Q1 of the power switch 211. When the battery module 20 is short-circuited or the battery module 20 supplies power to the capacitive load, a port voltage of the battery module 20 is low or close to 0 V. In this case, the controller 213 triggers a discharging overcurrent protection function, and stops sending the PWM signal to the first switch Q1 of the power switch 211, to turn off the first switch Q1. The foregoing operation is repeated at an interval of δT2. In this way, if repetitions reach N times, it is identified that a post phase is a capacitive load or is short-circuited, and transmission of a PWM waveform with a full duty cycle is suspended. After a rest for δT3, a next phase starts. The time period t1-t2 is the foregoing "second specified time".

A time period t2-t3 is a stepped duty cycle phase. The controller 213 periodically sends PWM signals with different duty cycles Dinit to the first switch Q1 of the power switch 211 in the time period t2-t3. A duty cycle of a PWM signal sent by the controller 213 in each cycle is a different value, and a value of the duty cycle is continuously increased, and the duty cycle of the PWM signal is increased from the specified duty cycle to the full duty cycle. When the battery module 20 is short-circuited, the output voltage Vbus of the output port 23 is basically 0 V or less than the specified voltage Vmin. The controller 213 detects the output voltage Vbus of the output port 23 at a moment δt4, stops slow starting, and completes the short-circuit identification function. When the load powered by the battery module 20 is the capacitive load, the output voltage Vbus of the output port 23 is increased by △V in each switch cycle. When the capacitance value of the capacitive load is large, a value of △V by which the output voltage Vbus of the output port 23 is increased in each switch cycle is small, and the output voltage Vbus of the output port 23 is less than Vbat-δV in the time period t2-t3. The controller 213 stops sending the PWM signal to the first switch Q1, and ends slow starting. When the capacitance value of the capacitive load powered by the battery module 20 is small, a value of △V by which the output voltage Vbus of the output port 23 is increased in each switch cycle is large, and the output voltage Vbus of the output port 23 is not less than Vbat-δV in the time period t2-t3. The battery module completes slow starting in advance, to adaptively adjust slow start time, and enter a next time period. The time period t2-t3 is the foregoing "third specified time". Vbat-δV is the foregoing "specified voltage".

A time period t3-t4 is a full duty cycle phase. The controller 213 periodically sends a PWM signal with a full duty cycle D to the first switch Q1 of the power switch 211 in the time period t3-t4. The time period t3-t4 is the foregoing "fifth specified time". A value by which the duty cycle is increased each time is the foregoing "specified duty cycle".

In this embodiment of this application, in the time period t2-t3, when the output voltage Vbus of the output port 23 is not less than Vbat-δV in the time period t2-t3, the controller 213 determines that the battery module 20 supplies power to the capacitive load, and may enter a next phase in advance to give the full duty cycle, and end slow starting, so that detection time can be shortened. In a time period t2-t4, when the output voltage Vbus of the output port 23 is less than Vmin, the controller 213 determines that the battery module 20 is short-circuited. The controller 213 may stop transmitting a waveform and end slow starting. In the time period t2-t3, when a value by which a value of the duty cycle is increased each time is continuously increased, slow start time of the battery module 20 may be reduced.

Compared with the technical solution shown in FIG. 4, when the duty cycle of the PWM signal sent by the controller 213 in each cycle is the different value, and the value of the duty cycle is continuously increased, a voltage value △V by which the output voltage of the output port 23 is increased in each cycle is continuously increased. When the battery module 20 supplies power to the capacitive load, time for the output voltage Vbus of the output port 23 to reach Vbat-δV is shortened. This can shorten time for the controller 213 to send the PWM signal, reduce a risk of damage to another component of the battery module 20, and reduce a requirement on electrical and thermal performance. In addition, when the battery module 20 supplies power to the capacitive load with the large capacitance value, the output voltage Vbus of the output port 23 may be increased to Vbat-δV in the time period t2-t3. This can reduce detection time for the battery module 20 to supply power to the capacitive load with the large capacitance value, reduce a risk of damage to another component of the battery module 20, and reduce a requirement on electrical and thermal performance.

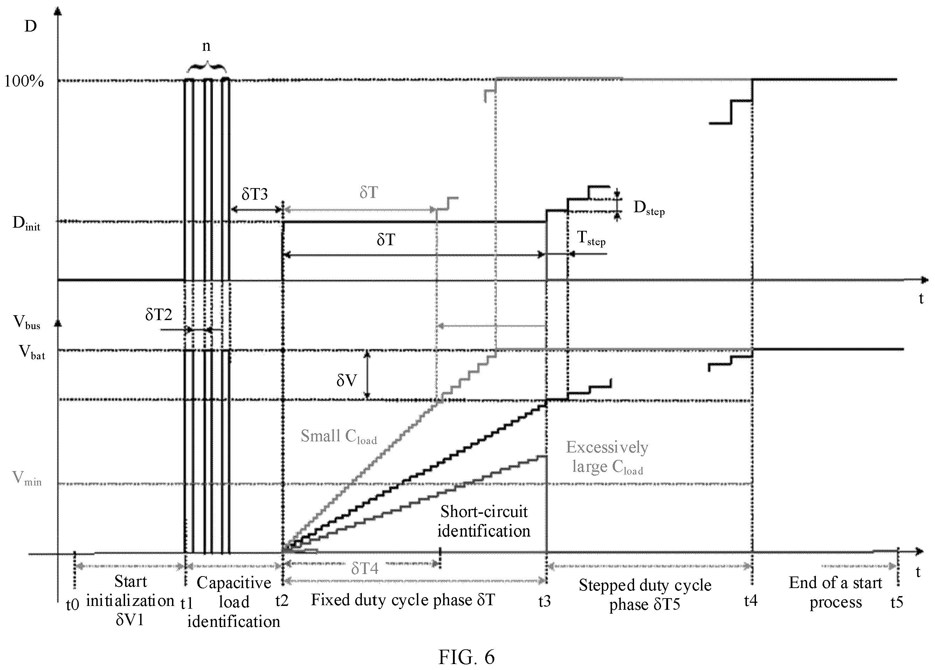

FIG. 6 is a schematic diagram of a relationship among a PWM signal, time, and an output voltage for a controller to identify a capacitive load according to an embodiment of this application. As shown in FIG. 6, in a time period t0-t1, the battery module 21 is in a start phase. The controller 213 does not send a PWM signal to the first switch Q1 of the power switch 211 in this phase. The time period t0-t1 is the foregoing "first specified time".

A time period t1-t2 is a capacitive load identification phase. After the battery module 20 completes discharging start work, the controller 213 periodically sends the PWM signal with the full duty cycle D to the first switch Q1 of the power switch 211. When the battery module 20 is short-circuited or the battery module 20 supplies power to the capacitive load, a port voltage of the battery module 20 is low or close to 0 V. In this case, the controller 213 triggers a discharging overcurrent protection function, and stops sending the PWM signal to the first switch Q1 of the power switch 211, to turn off the first switch Q1. The foregoing operation is repeated at an interval of δT2. In this way, if repetitions reach N times, it is identified that a post phase is a capacitive load or is short-circuited, and transmission of a PWM waveform with a full duty cycle is suspended. After a rest for δT3, a next phase starts. The time period t1-t2 is the foregoing "second specified time".

A time period t2-t3 is a fixed duty cycle phase. The controller 213 periodically sends a PWM signal with a specified duty cycle Dinit to the first switch Q1 of the power switch 211 in the time period t2-t3. When the battery module 20 is short-circuited, the output voltage Vbus of the output port 23 is basically 0 V or less than the specified voltage Vmin. The controller 213 detects the output voltage Vbus of the output port 23 at a moment δt4, stops slow starting, and completes the short-circuit identification function. When the load powered by the battery module 20 is the capacitive load, the output voltage Vbus of the output port 23 is increased by △V in each switch cycle. When the capacitance value of the capacitive load is large, a value of △V by which the output voltage Vbus of the output port 23 is increased in each switch cycle is small, and the output voltage Vbus of the battery module 20 is less than Vbat-δV in the time period t2-t3. The controller 213 stops sending the PWM signal to the first switch Q1, and ends slow starting. When the capacitance value of the capacitive load powered by the battery module 20 is small, a value of △V by which the output voltage Vbus of the output port 23 is increased in each switch cycle is large, and the output voltage Vbus of the output port 23 is not less than Vbat-δV in the time period t2-t3. The battery module completes slow starting in advance, to adaptively adjust slow start time, and enter a next time period. The time period t2-t3 is the foregoing "third specified time". Vbat-δV is the foregoing "specified voltage".

A time period t3-t4 is a stepped duty cycle phase. The controller 213 periodically sends PWM signals with different duty cycles Dinit to the first switch Q1 of the power switch 211 in the time period t3-t4. A duty cycle of a PWM signal sent by the controller 213 in each cycle is a different value, and a value of the duty cycle is continuously increased, and the duty cycle of the PWM signal is increased from the specified duty cycle to the full duty cycle. When the load powered by the battery module 20 is the capacitive load, a speed at which the output voltage Vbus of the output port 23 is increased in each switch cycle is greatly increased, to accelerate completion of a slow start process. The time period t3-t4 is the foregoing "fourth specified time". A value by which the duty cycle is increased each time is the foregoing "specified duty cycle".

A time period t4-t5 is a full duty cycle phase. The controller 213 periodically sends a PWM signal with a full duty cycle D to the first switch Q1 of the power switch 211 in the time period t4-t5. The time period t4-t5 is the foregoing "fifth specified time".

In this embodiment of this application, in a time period t2-t4, when the output voltage Vbus of the output port 23 is not less than Vbat-δV in the time period t2-t4, the controller 213 determines that the battery module 20 supplies power to the capacitive load, and may stop transmitting a waveform, and end slow starting, so that detection time can be shortened. In a time period t2-t5, when the output voltage Vbus of the output port 23 is less than Vmin, the controller 213 determines that the battery module 20 is short-circuited. The controller 213 may stop transmitting a waveform and end slow starting.

In this embodiment of this application, the processor 213 first uses a fixed duty cycle in an initial phase, and then increases the duty cycle step by step, so that a short-circuit impulse current can be suppressed when the load is truly short-circuited. In a scenario in which the load is not short-circuited, the slow start time can be shortened. Compared with the technical solution shown in FIG. 4, after the output voltage of the output port 23 satisfies a δV voltage difference condition, because the duty cycle is increased step by step, impact of a discharging current at a moment t3 is smaller.

Compared with the technical solution shown in FIG. 5, when the battery module 20 supplies power to the capacitive load with the large capacitance value, the output voltage Vbus of the output port 23 may be increased to Vbat-δV within time when the duty cycle of the PWM signal is increased from the specified duty cycle to the full duty cycle, so that whether the battery module 20 is short-circuited or the load powered by the battery module 20 is the capacitive load with the large capacitance value can be distinguished. This can reduce detection time for the battery module 20 to supply power to the capacitive load with the large capacitance value, reduce a risk of damage to another component of the battery module 20, and reduce a requirement on electrical and thermal performance. In addition, when the capacitive load is pre-charged in the fixed duty cycle phase, a voltage difference between a battery voltage and an output port voltage of a lithium battery product in the stepped duty cycle phase is smaller, and an electrical stress is smaller.

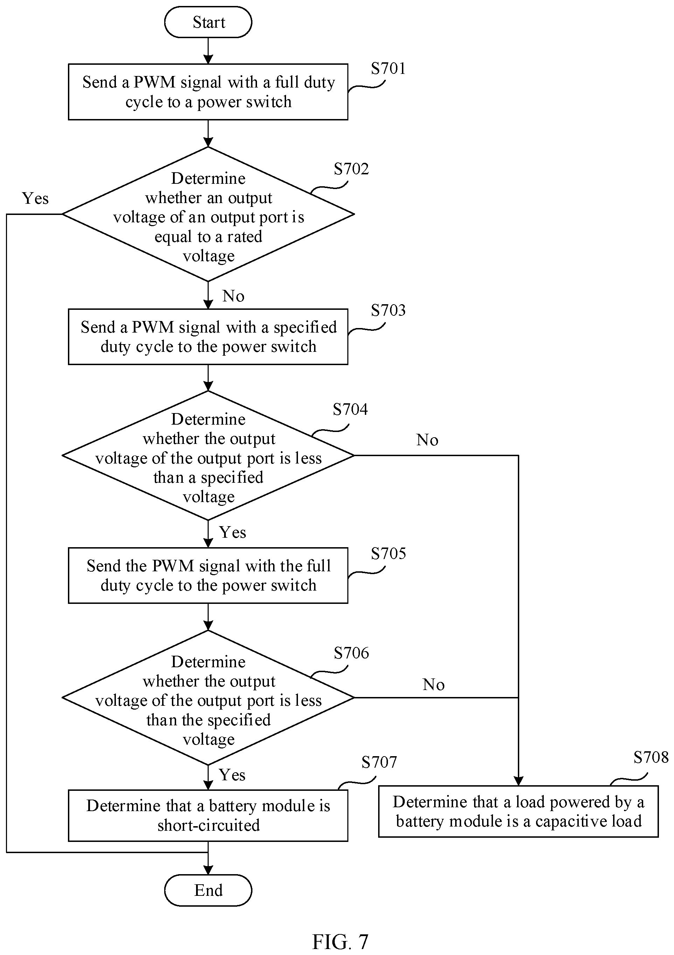

FIG. 7 is a schematic flowchart of a battery module control method according to an embodiment of this application. As shown in FIG. 7, the control method is executed by a processor 213, and a specific implementation process is as follows.

Step S701: The controller 213 delays for specified time to send a PWM signal with a full duty cycle to a first switch Q1 of a power switch 211.

When the controller 213 controls battery packs 22 to discharge, the controller 213 needs to invoke a discharge component to work, so that the battery packs 22 can discharge. When the controller 213 starts the battery packs 22 to discharge, the controller 213 sends the PWM signal to a switch of the power switch 211 after delaying for first specified time. After discharging is started, a battery module 21 supplies power to a capacitive load after delaying for the specified time, to avoid a detection error of the controller 213.

After determining that the battery module 20 completes discharging start work, the controller 213 sends the PWM signal with the full duty cycle to a second switch Q2 of the power switch 211, so that the second switch Q2 can be always in an on/off state. The controller 213 may send the PWM signal with the full duty cycle to the first switch Q1 of the power switch 211 for a plurality of times within second specified time. After receiving the PWM signal, the first switch Q1 of the power switch 211 may enable the power switch 211 to be in an on state.

Step S702: The controller 213 detects whether an output voltage that is of an output port 23 and that is obtained when the PWM signal is sent each time is equal to a voltage of the plurality of battery packs of the battery module 20. When the output voltage of the output port 23 is equal to the voltage of the plurality of battery packs of the battery module 20, the controller 213 ends an operation. When the output voltage of the output port 23 is not equal to the voltage of the plurality of battery packs of the battery module 20, step S703 is performed.

When the controller 213 sends the PWM signal to the first switch Q1 of the power switch 211, the controller 213 may receive, in real time, a sampling voltage Vbus that is of the output port 23 and that is collected by a sampling circuit 212. After receiving the sampling voltage Vbus, the controller 213 determines whether the sampling voltage Vbus is equal to a voltage Vbat of the plurality of battery packs 21 of the battery module 20. In an embodiment, when the controller 213 determines that the sampling voltage Vbus is equal to the voltage Vbat of the plurality of battery packs 21 of the battery module 20, the controller 213 may consider that the battery module 20 is not short-circuited or a load powered by the battery module 20 is another non-capacitive load. In an embodiment, when the sampling voltage Vbus is less than the voltage Vbat of the plurality of battery packs 21 of the battery module 20, the controller 213 may consider that the battery module 20 is short-circuited or the battery module 20 supplies power to the capacitive load, and triggers an overcurrent protection function. The controller 213 stops sending the PWM signal to the first switch Q1 of the power switch 211, and turns off a drive, so that the battery module 20 stops outputting electric energy.

After a period of time, the controller 213 sends the PWM signal with the full duty cycle to the first switch Q1 of the power switch 211 again, and receives the sampling voltage Vbus that is of the output port 23 and that is collected by the sampling circuit 212. The controller 213 detects again whether the battery module 20 triggers the overcurrent protection function. The rest may be deduced by analogy, until the controller 213 completes a plurality of times of detection on whether the battery module 20 triggers the overcurrent protection function. When the controller 213 sends the PWM signal for the plurality of times and triggers overcurrent protection, the controller 213 may determine that the battery module 20 is short-circuited or the load powered by the battery module 20 is the capacitive load.

Step S703: The controller 213 sends a PWM signal with a specified duty cycle to the power switch.

The controller 213 sends the PWM signal with the specified duty cycle to the first switch Q1 of the power switch 211. When the battery module 20 is short-circuited, the output voltage of the output port 23 is very small or is 0. When the battery module 20 supplies power to the capacitive load, the output voltage of the output port 23 is gradually increased.

If the specified duty cycle is a fixed value, in a process in which the controller 213 sends the PWM signal to the first switch Q1 of the power switch 211, in a first switch cycle, after the controller 213 controls the power switch 211 to be in the on state, the output voltage of the output port 23 is increased by △V. In a second switch cycle, after the controller 213 controls the power switch 211 to be in the on state, the output voltage of the output port 23 is increased by △V again based on the first switch cycle to reach 2△V. By analogy, in an N^{th} switch cycle, after the controller 213 controls the power switch 211 to be in the on state, the output voltage of the output port 23 is N△V.

If the specified duty cycle is a stepped duty cycle, in a process in which the controller 213 sends the PWM signal to the first switch Q1 of the power switch 211, in the first switch cycle, the duty cycle of the PWM signal is D1. In a second switch cycle, the duty cycle of the PWM signal is increased by one specified duty cycle based on the first switch cycle, and the duty cycle of the PWM signal is denoted as D1 + △D1. In a third switch cycle, the duty cycle of the PWM signal is increased by one specified duty cycle based on the second switch cycle, and the duty cycle of the PWM signal is denoted as D1 + 2△D1. By analogy, in a M^{th} switch cycle, the duty cycle of the PWM signal is D1 + (M - 1)△D1.

Each time the duty cycle of the PWM signal is increased by the specified duty cycle, a voltage △V by which the output voltage of the output port 23 is increased each time is continuously increased. When the battery module 20 supplies power to the capacitive load, time for the output voltage Vbus of the output port 23 to reach the specified voltage is shortened. This can shorten time for the controller 213 to send the PWM signal, reduce a risk of damage to another component of the battery module 20, and reduce a requirement on electrical and thermal performance.

Step S704: The controller 213 detects whether the output voltage of the output port 23 is less than the specified voltage. When the output voltage of the output port 23 is less than the specified voltage, step S705 is performed. When the output voltage of the output port 23 is not less than the specified voltage, step S708 is performed.

In an embodiment, when the controller 213 detects that the output voltage Vbus of the output port 23 is not less than the specified voltage, the controller 213 may determine that the load powered by the battery module 20 is the capacitive load. In another embodiment, when the controller 213 determines that the load powered by the battery module 20 is the capacitive load, the controller 213 may stop sending the PWM signal with the specified duty cycle to the first switch Q1 of the power switch 211, to shorten time for turning on the battery module 20 and reduce a risk of burning down the battery module 20.

In an embodiment, when the controller 213 detects that the output voltage Vbus of the output port 23 is less than the specified voltage, the controller 213 may consider that the battery module 20 is short-circuited or a capacitance value of the capacitive load is large.

In this application, if the specified duty cycle is the fixed value, the controller 213 sends a PWM signal with a stepped duty cycle to the first switch Q1 of the power switch 211 again. The stepped duty cycle may be continuously increased from the specified duty cycle to the full duty cycle. In an embodiment, in a first switch cycle after the third specified time, the duty cycle of the PWM signal is D2. In a second switch cycle after the third specified time, the duty cycle of the PWM signal is increased by one specified duty cycle based on the first switch cycle, and the duty cycle of the PWM signal is D2 + △D2. In a third switch cycle after the third specified time, the duty cycle of the PWM signal is increased by one specified duty cycle based on the second switch cycle, and the duty cycle of the PWM signal is D2 + 2△D2. The rest may be deduced by analogy, until the duty cycle of the PWM signal sent by the controller 213 is the full duty cycle.

When the battery module 20 supplies power to the capacitive load with the large capacitance value, the controller 213 increases the duty cycle of the PWM signal from the specified duty cycle to the full duty cycle. If the output voltage of the output port 23 reaches the specified voltage in a process in which the duty cycle of the PWM signal is increased, the controller 213 may distinguish in advance whether the battery module 20 is short-circuited or the load powered by the battery module 20 is the capacitive load with the large capacitance value. This can reduce a risk of damage to another component of the battery module 20, and reduce a requirement on electrical and thermal performance.

Step S705: The controller 213 sends the PWM signal with the full duty cycle to the power switch.

Step S706: The controller 213 detects whether the output voltage of the output port 23 is less than the specified voltage. When the output voltage of the output port 23 is less than the specified voltage, step S707 is performed. When the output voltage of the output port 23 is not less than the specified voltage, step S708 is performed.

The controller 213 sends the PWM signal with the full duty cycle to the first switch Q1 of the power switch 211. When the controller 213 sends the PWM signal to the first switch Q1 of the power switch 211, the controller 213 collects the output voltage of the output port 23 in real time by using the sampling circuit 212. The controller 213 may determine, based on whether the output voltage Vbus of the output port 23 is less than the specified voltage, whether the load powered by the battery module 20 is the capacitive load with the large capacitance value.

In an embodiment, when the controller 213 detects that the output voltage Vbus of the output port 23 is not less than the specified voltage, the controller 213 may determine that the capacitance value of the capacitive load is large. In an embodiment, when the controller 213 detects that the output voltage Vbus of the output port 23 is less than the specified voltage, the controller 213 may consider that the battery module 20 is short-circuited.

Step S707: The controller 213 determines that the battery module 20 is short-circuited.

Step S708: The controller 213 determines that the load powered by the battery module 20 is the capacitive load.

When determining that the battery module 20 supplies power to the capacitive load, the controller 213 may stop transmitting a waveform, and end slow starting, so that detection time can be shortened. When the controller 213 determines that the battery module 20 is short-circuited, the controller 213 may stop transmitting a waveform and end slow starting.

In this embodiment of this application, the controller 213 controls a duty cycle and time for sending the PWM signal to the first switch Q1 of the power switch 211, so that the three cases in which the battery module 20 supplies power to a capacitive load with a small capacitance value, the battery module 20 supplies power to a capacitive load with a large capacitance value, and the battery module 20 is short-circuited can be identified in different time periods. For example, the controller 213 sends the PWM signal with the full duty cycle to the first switch Q1 of the power switch 211 for the plurality of times within the second specified time. When the controller 213 sends the PWM signal for the plurality of times and triggers overcurrent protection, the controller 213 may determine that the battery module 20 is short-circuited or the load powered by the battery module 20 is the capacitive load.

An embodiment of this application further provides a computer program product including instructions. The computer program product may be software or a program product that includes instructions and that can run on a computing device or that is stored in any usable medium. When the computer program product runs on at least one computing device, the at least one computing device is enabled to perform a battery module control method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid state disk), or the like. The computer-readable storage medium includes instructions, and the instructions instruct the computing device to perform a battery module control method.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that modifications can still be made to the technical solutions described in the foregoing embodiments or equivalent replacements can still be made to some technical features thereof, without departing from the protection scope of the technical solutions of embodiments of the present invention.

## Claims

1. A battery module (20), comprising:
a plurality of battery packs (22);
an output port (23), electrically connected to a load, and configured to enable the battery module to provide electric energy for the load;
a power switch (211), coupled between the plurality of battery packs and the output port, and configured to control the plurality of battery packs to transfer electric energy to the output port;
a sampling circuit (212), coupled to the output port, and configured to collect an output voltage of the output port; and
a controller (213), configured to send a PWM signal with a specified duty cycle to the power switch, wherein the PWM signal is used to control the power switch to be in an on state; and
the controller is further configured to: receive the output voltage collected by the sampling circuit, and in response to that the output voltage is not less than a specified voltage, determine that the load powered by the battery module is a capacitive load.

2. The battery module according to claim 1, wherein the controller is further configured to: send a PWM signal with a full duty cycle to the power switch; and
receive the output voltage collected by the sampling circuit, and in response to that the output voltage is less than a total voltage of the plurality of battery packs, determine that the load powered by the battery module is the capacitive load or the battery module is short-circuited.

3. The battery module according to claim 2, wherein the controller is further configured to delay for specified time to send the PWM signal with the full duty cycle to the power switch, and the specified time is time for the controller to start the plurality of battery packs to discharge.

4. The battery module according to any one of claims 1 to 3, wherein the controller is further configured to: in response to that the output voltage is not less than the specified voltage, send a PWM signal with a stepped duty cycle to the power switch, wherein the stepped duty cycle is a changed duty cycle increased from the specified duty cycle to the full duty cycle; and
receive the output voltage collected by the sampling circuit, and in response to that the output voltage is equal to the total voltage of the plurality of battery packs, send the PWM signal with the full duty cycle to the power switch.

5. The battery module according to any one of claims 1 to 4, wherein the specified duty cycle is the stepped duty cycle.

6. The battery module according to claim 4 or 5, wherein the stepped duty cycle is a changed duty cycle increased by the specified duty cycle at an interval of at least one switch cycle, and a value of the specified duty cycle increased each time is continuously increased.

7. The battery module according to any one of claims 1 to 6, wherein the controller is further configured to: send the PWM signal with the full duty cycle to the power switch, and receive the output voltage collected by the sampling circuit; and
in response to that the output voltage is not less than the specified voltage, determine that the load powered by the battery module is the capacitive load; or
in response to that the output voltage is less than the specified voltage, determine that the battery module is short-circuited.

8. A battery module control method, applied to a battery module, wherein the battery module comprises a plurality of battery packs, an output port, a power switch, a sampling circuit, and a controller; the power switch is coupled between the plurality of battery packs and the output port; the sampling circuit is coupled to the output port; the controller is separately coupled to the power switch and the sampling circuit; and the method is performed by the controller, and comprises:
controlling the plurality of battery packs to discharge;
sending a PWM signal with a specified duty cycle to the power switch, wherein the PWM signal is used to control the power switch to be in an on state; and
receiving an output voltage collected by the sampling circuit, and in response to that the output voltage is not less than a specified voltage, determining that a load powered by the battery module is a capacitive load.

9. The method according to claim 8, wherein before the sending a PWM signal with a specified duty cycle to the power switch, the method further comprises:
sending a PWM signal with a full duty cycle to the power switch; and
receiving the output voltage collected by the sampling circuit, and in response to that the output voltage is less than a total voltage of the plurality of battery packs, determining that the load powered by the battery module is the capacitive load or the battery module is short-circuited.

10. The method according to claim 8 or 9, wherein the specified duty cycle is a fixed value, and the method further comprises:
in response to that the output voltage is not less than the specified voltage, sending a PWM signal with a stepped duty cycle to the power switch, wherein the stepped duty cycle is a changed duty cycle increased from the specified duty cycle to the full duty cycle; and
receiving the output voltage collected by the sampling circuit, and in response to that the output voltage is equal to the total voltage of the plurality of battery packs, sending the PWM signal with the full duty cycle to the power switch.

11. The method according to any one of claims 8 to 10, wherein the specified duty cycle is the stepped duty cycle.

12. The method according to any one of claims 8 to 11, wherein the method further comprises:
sending the PWM signal with the full duty cycle to the power switch, and receiving the output voltage collected by the sampling circuit; and
in response to that the output voltage is not less than the specified voltage, determining that the load powered by the battery module is the capacitive load; or
in response to that the output voltage is less than the specified voltage, determining that the battery module is short-circuited.

13. An electric vehicle, comprising:
at least one electric device; and
a power backup device, electrically connected to the at least one electric device, wherein the power backup device comprises a power switch, configured to control the power backup device to provide electric energy for the at least one electric device;
the power backup device is configured to send a PWM signal with a specified duty cycle to the power switch, wherein the PWM signal is used to control the power switch to be in an on state; and
the power backup device is further configured to: detect an output voltage, and in response to that the output voltage is not less than a specified voltage, determine that the electric device powered by the power backup device is a capacitive load.

14. The electric vehicle according to claim 13, wherein the power backup device is further configured to: in response to that the output voltage is not less than the specified voltage, send a PWM signal with a stepped duty cycle to the power switch, wherein the stepped duty cycle is a changed duty cycle increased from the specified duty cycle to a full duty cycle; and
detect the output voltage, and in response to that the output voltage is equal to a total voltage of the power backup device, send a PWM signal with the full duty cycle to the power switch.

15. The electric vehicle according to claim 13 or 14, wherein the specified duty cycle is the stepped duty cycle.

16. The electric vehicle according to either of claims 13 and 14, wherein the power backup device is further configured to: send the PWM signal with the full duty cycle to the power switch, and detect the output voltage; and
in response to that the output voltage is not less than the specified voltage, determine that the electric device powered by the power backup device is the capacitive load; or
in response to that the output voltage is less than the specified voltage, determine that the power backup device is short-circuited.

17. A power device, comprising:
at least one electronic component; and
at least one battery module, respectively electrically connected to the at least one electronic component, wherein the battery module comprises a power switch, configured to control the battery module to provide electric energy for the at least one electronic component;
the battery module is configured to send a PWM signal with a specified duty cycle to the power switch, wherein the PWM signal is used to control the power switch to be in an on state; and
the battery module is further configured to: detect an output voltage, and in response to that the output voltage is not less than a specified voltage, determine that the electronic component powered by the battery module is a capacitive load.

18. The power device according to claim 17, wherein the battery module is further configured to: in response to that the output voltage is not less than the specified voltage, send a PWM signal with a stepped duty cycle to the power switch, wherein the stepped duty cycle is a changed duty cycle increased from the specified duty cycle to a full duty cycle; and
detect the output voltage, and in response to that the output voltage is equal to a total voltage of the battery module, send a PWM signal with the full duty cycle to the power switch.

19. The power device according to claim 17 or 18, wherein the specified duty cycle is the stepped duty cycle.

20. The power device according to any one of claims 17 to 19, wherein the battery module is further configured to: send the PWM signal with the full duty cycle to the power switch, and detect the output voltage; and
in response to that the output voltage is not less than the specified voltage, determine that the electronic component powered by the battery module is the capacitive load; or
in response to that the output voltage is less than the specified voltage, determine that the battery module is short-circuited.
